(19) Europäisches Patentamt
European Patent Office
Office européen des brevets

(11) **EP 3 293 965 A1**

(12) **EUROPEAN PATENT APPLICATION**

(43) Date of publication:
**14.03.2018 Bulletin 2018/11**

(51) Int Cl.:
*H04N 5/32* (2006.01)        *H04N 5/355* (2011.01)
*H04N 5/374* (2011.01)        *H04N 5/243* (2006.01)
*H04N 5/235* (2006.01)

(21) Application number: **16188363.2**

(22) Date of filing: **12.09.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **Siemens Healthcare GmbH
91052 Erlangen (DE)**

• **IMEC vzw
3001 Leuven (BE)**
• **Katholieke Universiteit Leuven
3000 Leuven (BE)**

(72) Inventors:
• **TEDDE, Sandro Francesco
91085 Weisendorf (DE)**
• **KUTH, Rainer
91315 Höchstadt (DE)**

(54) **RADIATION SENSING PIXEL ELEMENT FOR AN IMAGE SENSOR APPARATUS**

(57)    The invention relates to a method for operating a radiation sensing pixel element (30) of an array (12) of radiation sensing pixel elements (30) of an image sensor apparatus (10), wherein the method comprises: sensing radiation with a photo diode (16); storing electric charge supplied by the photo diode (16), when the photo diode (16) is subjected to the radiation, in a pixel capacitor (18) connected with the photo diode (16); providing a pixel amplifier output signal at an output link (24) of a pixel amplifier (20) having an input link (22) connected with the pixel capacitor (18), wherein the pixel amplifier output signal depends on an amount of the electric charge stored in the pixel capacitor (18); and providing a pixel output signal at a pixel output link (36) of the radiation sensing pixel element (30) by a pixel selector transistor (26) dependent on the pixel amplifier output signal and a selector control signal of an analyzing circuitry (32) of the image sensor apparatus (10) in order to supply the pixel output signal to the analyzing circuitry (32); wherein the method also comprises controlling a gain defining the dependency between the pixel output signal and the amount of the electric charge stored in the pixel capacitor (18).

FIG 12

EP 3 293 965 A1

## Description

The present invention relates to a radiation sensing pixel element for an image sensor apparatus having an array of radiation sensing pixel elements, wherein the radiation sensing pixel element comprises: a photo diode in order to sense radiation; a pixel capacitor connected with the photo diode in order to store electric charge supplied by the photo diode when the photo diode is subjected to the radiation; a pixel amplifier having an input link connected with the pixel capacitor and an output link, wherein the pixel amplifier is configured to provide a pixel amplifier output signal at the output link dependent on an amount of the electric charge stored in the pixel capacitor; a pixel selector transistor having a first, a second, and a third link, wherein the first link is connected with the output link of the pixel amplifier and the second link forming a pixel output link is adapted to be connected with an analyzing circuitry of the image sensor apparatus, wherein the pixel selector transistor is configured to provide a pixel output signal at the pixel output link dependent on the pixel amplifier output signal and a selector control signal of the analyzing circuitry provided at the third link in order to supply the pixel output signal to the analyzing circuitry. The invention further relates to an image sensor apparatus including an array of radiation sensing pixel elements and an analyzing circuitry for analyzing pixel output signals of the radiation sensing pixel elements, wherein the analyzing circuitry is connected with the array of the radiation sensing pixel elements. Finally, the invention relates to a method for operating a radiation sensing pixel element of an array of radiation sensing pixel elements of an image sensor apparatus, wherein the method comprises: sensing radiation with a photo diode; storing electric charge supplied by the photo diode, when the photo diode is subjected to the radiation, in a pixel capacitor connected with the photo diode; providing a pixel amplifier output signal at an output link of a pixel amplifier having an input link connected to the pixel capacitor, wherein the pixel amplifier output signal depends on an amount of the electric charge stored in the pixel capacitor, and providing a pixel output signal at a pixel output link of the radiation sensing pixel element by a pixel selector transistor dependent on the pixel amplifier output signal and a selector control signal of an analyzing circuitry of the image sensor apparatus in order to supply the pixel output signal to the analyzing circuitry.

Image sensor apparatuses, radiation sensing pixel elements as well as methods for their operation are well-known to the state of the art. Image sensor apparatuses are generally used in the technical field of surveying quality of materials, in the field of exploration or examination in the medical field, especially clinical diagnostics, and/or the like. They are often used to detect or sense electromagnetic radiation, especially x-rays, but also ionizing radiation, e.g. based on electrons or other particles forming atoms. However, a broad field is formed by clinical diagnostics based on x-rays.

X-ray absorption of metallic objects in a human body is very high compared with usual tissue of the human body, especially usual tissue surrounding the metallic object. A metallic object may get into the human body as an implant during e.g. orthopedic surgery curing fractures of bones or the like. During such a surgery, at the end of such a surgery as well as in predefined periods after the surgery, clinical diagnostics are provided in order to monitor a progress of a result of the surgery. Usually, a clinical diagnostic is provided by 2D- or 3D-x-ray-imaging in order to analyze e.g. a proper position of the implant, for instance, checking whether a bone-screw is not too long or too short. Another approach deals with medical diagnostics in order to examine severe trauma's caused e.g. by bullets, fragments of explosions and/or the like.

At present, x-ray medical imaging is not well suited to depict extremely high contrasts caused by the previously mentioned objects contained in a human body. For example, in a 2D-x-ray-imaging, the foreign object in the human body may absorb almost the complete x-ray radiation so that a detector or the array of radiation sensing pixel elements cannot detect any tissue contrast within a shadow of this object. In a 3D-x-ray-imaging, the imaging system may fail to acquire a huge amount of raw data along beam-lines. As a consequence, respective 3D datasets are incomplete and algorithms applied to such datasets deliver huge image artifacts which are hardly to be interpreted by a respective operator or medical practitioner.

However, this is important especially in the neighborhood of the implant or object, respectively, because a surgeon requires just a lot of information just of this area.

Some approaches in the state of the art try to address these deficiencies. According to a first approach, the array of the radiation sensing pixel elements is also known as matrix detector. Traditional matrix detectors comprise pixels where their pixel capacitor is discharged by the photo diode when the photo diode is subjected to radiation. Such pixels are also known as passive pixels or passive pixel elements, respectively. During read-out of a certain pixel capacity, the previously discharged pixel capacity is filled again with electric charge and the amount of the electric charge supplied to the pixel capacity is determined. Consequently, such passive pixels cannot be read twice. Therefore, in order to create a high-dynamic range image, two images are recorded by the matrix detector, e.g. a first image based on a high dose of x-rays and a second image based on a low those of x-rays, or two consecutive shots, wherein a first read-out has a high gain and a second read-out has a low gain. Afterwards, the two resulted images need to be combined in order to achieve a high-dynamic range image. This is disclosed e.g. by US 9,230,311 B2. This is also referred to as passive pixel scheme (PPS).

Another approach for improving the dynamic range of an image based on x-ray matrix detectors uses two different pixel capacitors in each pixel which is connected with respective different gain settings in each pixel which is disclosed by US 9,106,851 B2 as well as WO 2009/156 927 A2. However, these teachings require substantial intervention in the construction of the radiation sensing pixel element and, moreover, increasing dimensions of the radiation sensing pixel element because additional capacitors have to be integrated in the radiation sensing pixel elements. These require respective space. Consequently, these technologies affect also the resolution of the image sensor apparatus.

However, these approaches suffer from affecting substantially the construction of each of the radiation pixel sensor elements, as they introduce a lot of heavy and expensive additional components and, in fact, they use to affect the dimensions of each of the radiation sensing pixel elements even further because such radiation sensing pixel elements need a lot of more space.

Consequently, it is an object of the invention to improve a imaging technology such that an enhanced contrast can be achieved, especially in an entire neighborhood of implants, objects or the like surrounded by human tissue in order to deliver a reliable image information about such a zone to a surgeon.

In order to solve the before-mentioned object, the invention teaches a radiation sensing pixel element, an image sensor apparatus, and a method for operating a radiation sensing pixel element according to the independent claims.

Further preferred embodiments can be derived from features of the dependent claims.

With regard to a generic radiation sensing pixel element, the invention proposes that the radiation sensing pixel element is configured to control a gain defining the dependency between the pixel output signal and the amount of the electric charge stored in the pixel capacitor.

With regard to a generic image sensor apparatus, the invention proposes that the array comprises radiation sensing pixel elements according to the invention.

With regard to a generic method, the invention proposes controlling a gain defining the dependency between the pixel output signal and the amount of the electric charge stored in the pixel capacitor.

The invention is based on the effect that the gain can be adjustable in a certain pixel. For this purpose, a pixel related gain can be defined so that the contrast can be improved. So, it is not only possible to provide images from objects having high contrast to differences in a single picture but it is also possible to reduce the required radiation in order to achieve a sufficient imaging by the image sensor apparatus. This is especially an advantage with regard to clinical diagnostics of human bodies where the exposure of x-rays shall be as small as possible in order to avoid an undesired effect caused by x-rays. Contrary to the state of the art, the invention does not need to change a capacity of the pixel capacitor, an integration time, and/or the like. It is only necessary to control the gain which defines the dependency between the pixel output signal and the amount of the electric charge stored in the pixel capacitor.

The gain can be controlled by components which are comprised by the radiation sensing pixel element. Especially, components can be used for adjusting or controlling the gain which are already comprised by generic radiation sensing pixel elements. Therefore, additional components in the radiation sensing pixel element can mainly be avoided. This allows applying the invention also to present constructions of radiation sensing pixel elements and image sensor apparatuses as well. Only minor adaptations may be necessary so that especially dimensions of the radiation sensing pixel elements can be maintained so that negative effects on the resolution of imaging can be avoided.

The radiation sensing pixel element is preferably provided for sensing x-rays. But generally, it can also be applied to radiation sensing pixel elements which are adapted to sense light, especially visible light, or the like. In this regard, the radiation sensing pixel element can also be combined with a scintillator which usually comprises a material that exhibits scintillation, a property of luminescence, when excited by high energy radiation or ionizing radiation. Moreover, the radiation sensing pixel element may be applied to particle radiation such as $\alpha$-rays, $\beta$-rays, and/or the like.

In this regard, the array of the radiation sensing pixel elements provide a respective plurality of pixel output signals which are analyzed by the analyzing circuitry in order to result in image data forming a data set. In this regard, the image sensor apparatus operates as a detector for a certain radiation in order to provide image data which can be displayed on a display to an operator, store respective datasets for later use and/or the like.

For this purpose, the image sensor apparatus may include a control module controlling the operation of the components of the image sensor apparatus, especially of the analyzing circuitry and the array of the radiation sensing pixel elements. Moreover, the control module may contain a storage unit e.g. in order to store data received from the array of the radiation sensing pixel elements. The image sensor apparatus may also comprise an interface adapted to be connected with e.g. a communication line or a communication network such as the Internet in order to supply the dataset to a distal computer, for example, a computer of an operator, or the like.

The invention avoids the introductory discussed disadvantages because additional space requiring capacitors are not necessary. The invention basically deals with the components and the structure which are already present in a generic radiation sensing pixel element.

The photo diode serves to sense the radiation for which the radiation sensing pixel element is designed. The photo diode may preferably be a semiconductor component. Although the invention is based on the use of a photo diode, other photon or ionizing particle sensing element can also be used in order to replace the photo diode without affecting the scope of the invention, for example, a phototransistor, a photocell, and/or the like.

The photo diode is subjected to a voltage applied to its anode and its cathode in a reversed manner, wherein a current flow is released caused by sensed radiation which depends on the amount of the radiation. Consequently, the pixel capacitor is charged by the photo diode depending on the amount of the radiation sensed by the photo diode.

For a radiation sensing pixel element which is adapted to be sensitive for x-rays, a shot of x-rays causes a certain electric charge in the pixel capacitor. This charge represents a radiation density at the photo diode. Analyzing all charges of all pixel capacitors of all of the radiation sensing pixel elements of the array therefore allows reconstructing the material arranged between the radiation source and the image sensor apparatus. So, an image of the material can be provided.

In order to receive data representing an image, a pixel output signal has to be supplied to the analyzing circuitry which depends on the electric charge stored in the pixel capacitor related to this shot. For this purpose, the pixel amplifier is provided which has an input link connected with the pixel capacitor. Moreover, the pixel amplifier has an output link providing a pixel amplifier output signal which depends on the amount of the electric charge stored in the pixel capacitor. Preferably, the operation of the pixel amplifier does not substantially affect the electric charge of the pixel capacitor. So, undesired effects on the electrical charge of the pixel capacitor can substantially be reduced in order to keep mistakes based here on as a small as possible. The pixel amplifier is a component of the radiation sensing pixel element. Therefore, the radiation sensing pixel element contains a pixel amplifier.

In order to provide controlled read-out of the radiation sensing pixel element, the radiation sensing pixel element further comprises the pixel selector transistor. The pixel selector transistor is connected with the output link of the pixel amplifier in order to receive the pixel amplifier output signal. Moreover, the pixel selector transistor forms a pixel output link of the radiation sensing pixel element which is adapted to be connected with the analyzing circuitry of the image sensor apparatus. So, by controlling the pixel selector transistor, a respective signal of the pixel amplifier can be switched onto a data line to supply the pixel output signal to the analyzing circuitry. This clarifies why the pixel selector transistor is controlled by a selector control signal of the analyzing circuitry which ensures that only predetermined of the radiation sensing pixel elements of the array provide their pixel output signal to the analyzing circuitry by the time.

This is a reason, why the pixel selector transistor is traditionally operated in a switch mode. The switch mode allows that the pixel selector transistor operates similar as a usual switch controlled by the selector control signal. Depending on an electric potential of the selector control signal, the pixel selector transistor provides for two statuses, namely, a switched-on-status and a switch-of-status. These both electrical potentials are chosen such that a controllable connection between the first link at the second link of the pixel selector transistor can be switched from low resistance to high resistance and vice-versa. The status of the pixel selector transistor depends directly on the electric potential provided at the third electrode of the pixel selector transistor which is provided by the selector control signal. In this regard, traditionally, the pixel selector transistor is operated in the switch mode only.

Further, the radiation sensing pixel element is configured to control the gain defining the dependency between the pixel output signal and the amount of the electric charge stored in the pixel capacitor. Considering the above, there are a few options allowing controlling the gain in order to adjust the contrast such that a high-dynamic range image can be achieved. The invention focuses on the pixel amplifier and the pixel selector transistor, which are components that are already present in the radiation sensing pixel element and which can be used for controlling the gain. However, it is also possible to provide additional components which allow adjusting the gain according to the invention. For example, the pixel amplifier can contain an operational amplifier including a respective network adjusting its amplifying factor in order to provide the gain. The gain control signal acts on the network in order to control the gain of the pixel amplifier.

Contrary to the before-mentioned passive pixel scheme (PPS) is the active pixel scheme (APS) where the pixel capacitor is charged by the photo diode when exposed to radiation. The charge of the pixel capacitor is read-out, and after having read-out the electric charge of the pixel capacitor, a reset element discharges the pixel capacitor so that the radiation sensing pixel element is ready for a new sensing term. The reset element can be provided by a reset transistor which preferably may be also controlled dependent on the selector control signal of the analyzing circuitry. For example, discharging of the pixel capacitor may be triggered by finishing the read-out procedure. It appears that the active pixel scheme provides advantage with regard to the passive pixel scheme because it allows an in-pixel amplification resulting in a noise reduction and increasing the speed of operation.

Especially for image sensor apparatuses adapted for use with x-rays, the invention can be used to provide an active, medical-grade, high resolution, high dynamic range x-ray backplane based on a-IGZO (amorphous indium gallium zinc oxide) thin-film technology with fast read-out. This enables low dose video rate x-ray imaging. a-IGZO is a semiconducting material which comprises substantially indium, gallium, zinc and oxygen. IGZO thin-film-transistor (TFT) is used in TFT-backplanes of flat-panel displays (FPD). IGZO-TFT has an electron mobility which is 20 to 50 times higher than that of amorphous silicon, also referred to as a-Si, which is often used in liquid-crystal displays (LCD) as well as e-papers, and the like. As a result, IGZO-TFT can improve the speed, the resolution as well as the size of flat-panel displays. One advantage of using IGZO over zinc oxide is that it can be deposited as a uniform amorphous phase while retaining the high carrier mobility common to oxide semiconductors. The invention can be applied to such materials but it is not limited thereto.

Obtaining a low x-ray dose for medical imaging has long been a research topic of interest and profound relevance. For large-area digital imaging, such as chest x-ray, mammography, or the like, the technology has been limited to flat-panel display technology (FPD) on glass using a-Si for cost reasons. a-Si may have limiting properties, e.g., only n-type may be provided, low mobility of the charge carriers as well as high bias stress. Consequently, a passive pixel scheme can be used having only one access transistor per pixel which imposes tough specs on an external read-out integrated circuit (ROIC) or the analyzing circuitry, respectively. A modified pixel design approach leads to a relaxed specification for the ROIC without compromising performance, and resulting in a more cost-affected x-ray image sensor apparatus.

Especially, when a-IGZO-thin-film technology is used, active amplification of the pixel output signal can be achieved within each radiation sensing pixel element. Such a backplane technology supports critical dimensions (CD) down to about 3 $\mu$m or less.

Active amplification inside of a radiation sensing pixel element allows increasing both, the operational speed and the dynamic range of a pixel by buffering and reducing data line noise. Moreover, further improvement can be achieved considering low mobility of the charge carriers and large data line capacitance by thin-film active pixel schemes operating in a current mode.

Therefore, according to a further aspect, the invention proposes that the radiation sensing pixel element is configured to provide an electric current as the pixel output signal. Consequently, the radiation sensing pixel element operates in a current mode. One advantage of the current mode is that an input signal, i.e. the charge of the pixel capacitor, is converted into a current by the pixel amplifier which can be read-out by the ROIC. Therefore, an important measure of merit is the gain defining the dependency between the pixel output signal and the amount of the electric charge stored in the pixel capacitor, here a charge-to-current gain (CtC-gain), namely, a ratio between the increase of the output current divided by a change in the charge of the pixel capacitor. The invention allows achieving a CtC-gain of about 50 $\mu$A/pC, or higher. Especially, it is possible to increase the CtC-gain, wherein, at the same time, decreasing a minimum transistor length of the technology.

According to a further exemplary embodiment, the radiation sensing pixel element comprises a gain control link configured to receive a gain control signal. Preferably, the gain control signal is provided by the analyzing circuitry or, alternatively, by the control module of the image sensor apparatus. The gain control signal allows amending the gain of the radiation sensing pixel element in order to improve the dynamic of the radiation sensing pixel element. However, the gain control signal can alternatively be provided by the radiation sensing pixel element itself, for example by measuring a saturation of the pixel amplifier and reducing an amplification factor respectively by the gain control signal in order to leave the saturated mode of the pixel amplifier, or the like.

According to another exemplary embodiment, the pixel amplifier is connected with the gain control link and is configured to adjust an amplification factor dependent on the gain control signal. This feature allows varying the gain in an easy way by a preferably external signal with regard to the radiation sensing pixel element. Preferably, the analyzing circuitry provides a respective gain control signal when reading-out the respective radiation sensing pixel element. So, individual adjustment of the gain can be achieved so that a high resolution combined with a high dynamic range can be achieved. The external instance providing the gain control signal has at the same time the information about the gain so that this information can be used for adapting and interpreting the read-out data of the radiation sensing pixel element.

Preferably, it is proposed according to an exemplary embodiment that the pixel amplifier comprises an amplification transistor. This allows a very compact and easy radiation sensing pixel element, especially, by use of the before-mentioned technologies, in order to allow manufacturing of a matrix comprising the array of radiation sensing pixel elements by use of the before-mentioned technologies. Preferably, the amplification transistor is formed by a field effect transistor because a field effect transistor (FET) has the advantage of a very high input resistance so that during its determined operation the charge of the pixel capacitor is not substantially amended. Moreover, FET's are easy to produce in thin-film technologies, especially, technologies as discussed above.

According to a further exemplary embodiment, the pixel amplifier is connected with a ground level that is provided by the radiation sensing pixel element, wherein an electric potential of the ground level is controlled by the gain control signal, wherein the pixel amplifier is configured to adjust the amplification factor dependent on the electric potential of the ground level. In this regard, an easy way of adjusting the amplification factor can be provided in order to adjust the gain of the pixel amplifier. This embodiment can be not only used for general purpose amplifiers, but especially for embodiments using an amplification transistor, especially a FET for the purpose of amplification inside the radiation sensing pixel element. So, the ground level can be used for adjusting the amplification factor. Especially, if a FET is used, the ground level can be connected with a source of the FET. Varying the electric potential of the ground level, leads to respective varying of a gate-source-voltage which determines an operating point of the FET which, in turn, affects the amplification factor, and finally the gain. The FET can preferably be formed by a metaloxide semiconductor field effect transistor (MOSFET).

According to another exemplary embodiment, it is proposed that the pixel amplifier is configured to control a first operating point of the amplification transistor dependent on the gain control signal. So, the pixel amplifier may comprise additional circuitry which influences the first operating point of the amplification transistor. In this way, a further possibility of controlling the gain can be derived. If the pixel amplifier is formed by a single amplification transistor, the amplification factor can be influenced by providing a bias voltage at a control electrode of the amplification transistor which is a gate electrode when the amplification transistor is formed by a FET. As the amplification factor depends on the first operating point, the gain can be adjusted as required.

A further improvement can be exemplarily achieved if the amplification transistor has a separate control electrode which the gain control signal is acting on in order to control the first operating point. This allows affecting the first operating point of the amplification transistor in an easy way because an electric coupling to the pixel capacitor can be substantially avoided. A nearly independent adjustment of the first operating point can be achieved.

According to an additional exemplary embodiment, the pixel output signal is formed by the electric current and the radiation sensing pixel element is configured to control the first operating point of the amplification transistor by a voltage supplied to the pixel output link. As the pixel output signal is formed by the electric current which is mainly independent from a voltage on the pixel output link, a voltage can additionally be applied to the pixel output link which can be used for controlling the gain of the radiation sensing pixel element. This voltage can form the gain control signal. Therefore, the image sensor apparatus does not need to provide additional wiring in order to control the gain of a certain radiation sensing pixel element. Preferably, if the amplification transistor is provided, the voltage of the pixel output link can directly act on the gate of the amplification transistor, especially, on the gate of the FET. This allows easy control of the gain of the radiation sensing pixel element.

According to another exemplary embodiment, the pixel selector transistor is configured to be operated at least partially in a linear operating mode in response to the gain control signal. Preferably, the traditional switch mode is replaced by a combined mode which allows providing the switch-off status when the analyzing circuitry does not read-out the respective radiation sensing pixel element, wherein the traditional switch-on status is replaced by a linear operating mode so that the pixel selector transistor provides a certain resistance controllable by the gain control signal that affects the gain of the radiation sensing pixel element. This option can be provided instead of controlling the amplification factor of the pixel amplifier or it can be combined therewith.

Preferably, the invention proposes that the pixel selector transistor is connected with the amplification transistor such that the first operating point of the amplification transistor is controlled by the pixel selector transistor. In this regard, the pixel selector transistor can, for example, be connected with the source electrode of the FET, wherein adjustment of the pixel selector transistor in the on-status leads to corresponding adjustment of its resistance which affects the gate-source-voltage of the FET as amplification transistor so that the operating point of the amplification transistor can be adjusted in order to achieve the desired gain.

According to another exemplary embodiment, the radiation sensing pixel element can be configured to adjust a second operating point of the pixel selector transistor dependent on the gain control signal. In this embodiment, the pixel selector transistor provides the respective gain as desired. The pixel amplifier needs not to be influenced. However, an additional control of the amplification factor of the pixel amplifier can be provided.

Preferably, the pixel selector transistor is also formed by a FET. Alternatively, the pixel selector transistor can also be formed by a bipolar transistor or the like. However, with regard to power consumption and control expense, the FET has some advantages with regard to bipolar transistors. Because the control energy may be extremely small for an FET with regard to bipolar transistor and the range of the control voltage may be much broader than that of a bipolar transistor, a respective control signal for the FET may be much simpler to be provided than for a bipolar transistor.

The advantages and aspects as discussed with regard to the radiation sensing pixel element can be also applied to the image sensor apparatus and the method for operating the radiation sensing pixel element as well.

The teachings of the present patent application can be readily understood and at least some additional specific details will appear by considering the following detailed description of at least exemplary embodiments in conjunction with the accompanying drawings. In the drawings, same features and functions are designated by same reference characters. In the FIGs show:

FIG 1     a schematic circuitry of a radiation sensing pixel element forming portion of a circuitry of an array comprising a plurality of radiation sensing pixel elements according to a passive pixel schematic;

FIG 2     a schematic block diagram showing components of an x-ray imager system comprising a TFT array forming a plurality of radiation sensing pixel elements;

FIG 3     schematic circuitry of a portion of the TFT array of FIG 2 with regard to a single radiation sensing pixel element of the array;

FIG 4    a portion of a circuitry of the array of four radiation sensing pixel elements of FIG 3 showing an interconnection within the array;

FIG 5    a schematic circuitry of a radiation sensing pixel element based on a passive pixel scheme;

FIG 6    a schematic diagram showing signaling of the radiation sensing pixel element according to FIG 5;

FIG 7    a schematic block diagram for a radiation sensing pixel element operating in a current mode;

FIG 8    an alternative embodiment according to FIG 7 in a schematic circuitry;

FIG 9    a schematic circuitry for a single radiation sensing pixel element according to an active pixel scheme and using the current mode according to FIG 7 or FIG 8;

FIG 10   a schematic signaling diagram for the radiation sensing pixel element according to FIG 9;

FIG 11   a schematic read-out scheme allowing to read-out the radiation sensing pixel element two times between two consecutive resets;

FIG 12   a schematic circuitry for an alternative radiation sensing pixel element according to the active pixel scheme in a current mode with regard to FIG 9;

FIG 13   a schematic structure for an amplification transistor formed by a field effect transistor which has a dual gate construction;

FIG 14   a schematic diagram showing the dependency of a drain current of the field effect transistor according to FIG 13 dependent on different gate voltages at both of the gates of the field effect transistor of FIG 13;

FIG 15   a schematic circuitry for a read-out integrated circuit using correlated double sampling;

FIG 16   a schematic time diagram and connected block diagram for the read-out integrated circuit according to FIG 15;

FIG 17   a schematic block diagram showing functional blocks of an image sensor apparatus using radiation pixel sensor elements according to the invention; and

FIG 18   a schematic circuitry for a radiation sensing pixel element using a dual gate field effect transistor according to FIG 13 based on a circuitry structure according to FIG 12.

Generally, adjusting a dynamic range of a sensor read-out is a very useful feature for any application. For example, multiple options can be implemented in CMOS imager or other type of CMOS sensor array for an image sensor apparatus. One implementation relates to adjusting an exposure time or adding an external reduction in dose. CMOS integration allows complex pixel engines and complex read-out schemes for arrays of radiation sensing pixel elements. Moreover, a frame rate and/or a read-out speed can be adjusted by several orders of magnitude. Preferably, an active pixel scheme is implemented that allows an in-pixel amplification which results in a reduction of noise and an increasing of the speed. In this regard, a compromise between speed, noise, linearity, range and cost can be achieved. However, limitations can be given by a size of the radiation sensing pixel element, a size of a pixel capacitor and/or a voltage range, especially having in view that available supply rails in CMOS-technology allow voltages between 0.9 V to 5 V depending on the technology node.

In large area sensor read-outs made in thin-film-transistor-technology, such as e.g. a-Si, metal oxide, low-temperature poly-silicon (LTPS), there may appear additional limitations on the complexity of a suited read-out scheme and pixel design. Traditionally used passive pixel (1T1C)-technologies are implemented, since a-Si-TFTs have a low mobility and a low bias stability. TFT's based on LPTS have a higher mobility and a better bias stability but may suffer from ununiformity and high leakage current detrimental to a sensor array. Therefore, for large area sensor arrays having a plurality of radiation sensing pixel elements, especially for image sensor apparatuses for x-rays, an increased dynamic range can be achieved by the invention.

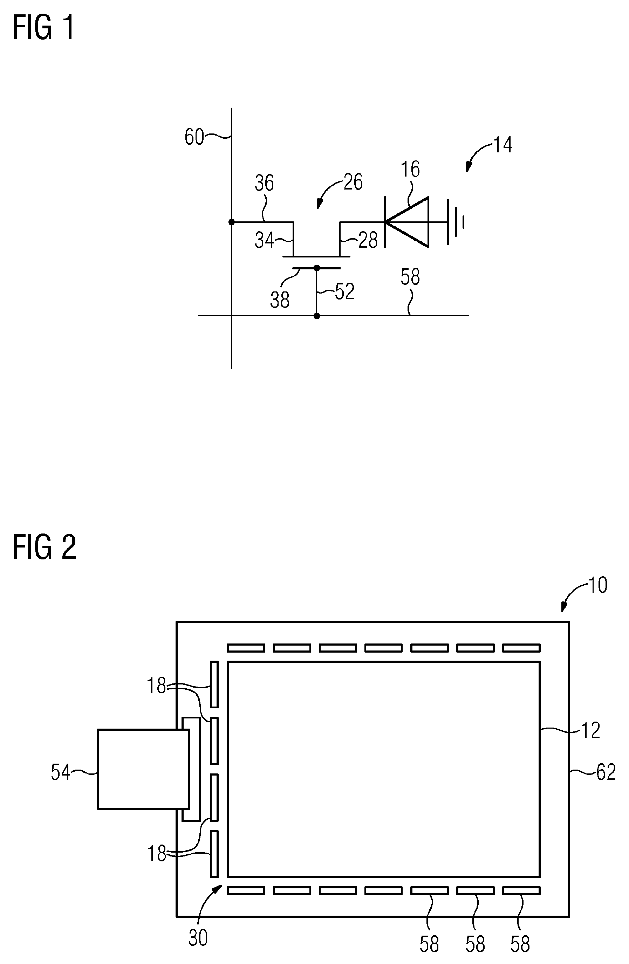

An exemplary image sensor apparatus 10 is shown in FIG 2. FIG 2 shows a schematic block diagram of a portion of the image sensor apparatus 10 having an array of radiation sensing pixel elements 30 forming a TFT-array 12 including a photo detector and a scintillator which are not shown in FIG 2. Presently, the TFT-array 12 has dimensions in the plane of about 20 cm in one of two orthogonal directions and 30 cm in the other orthogonal direction. The TFT-array 12 forms a flat rectangular component of the image sensor apparatus 10. The TFT-array 12 is arranged on a framework 62 contacting the photo detectors which are formed by the radiation sensing pixel elements 30. For this purpose, gate-select-lines 58 as well as read-out-lines 60 are provided in order to allow a selected read-out of each of the radiation sensing pixel elements 30 of the TFT-array 12.

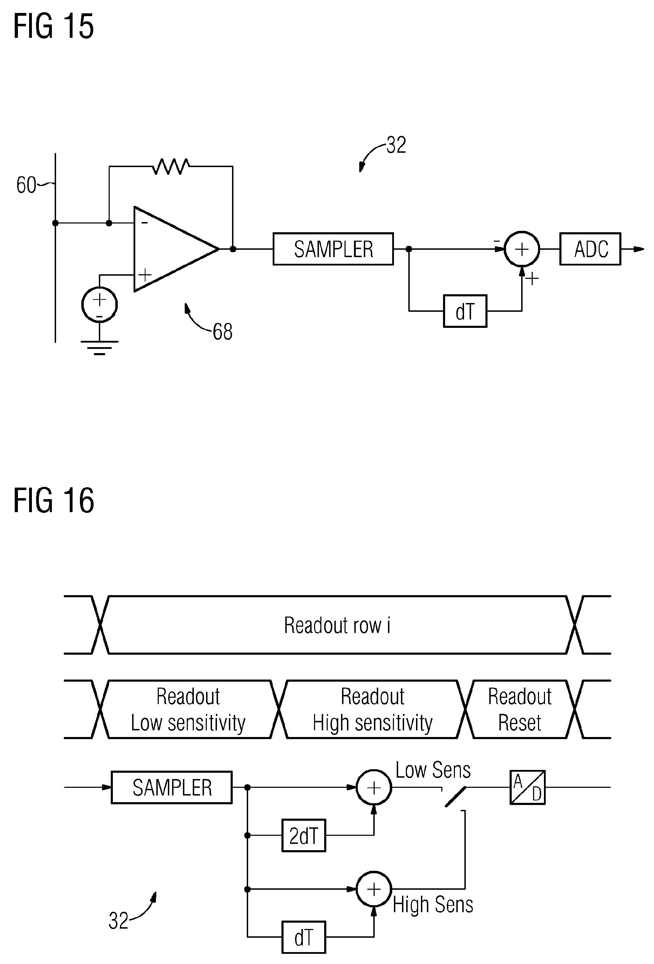

The framework 62 further has a flex-bond wiring 54 that connects all of the gate-select-lines 58 and the read-out-lines 60 with a distal arranged analyzing circuitry 32 (FIG 15) of the image sensor apparatus 10. The flex bond wiring 54 provides therefore electrical connection.

X-ray machines, such as the image sensor apparatus 10, are widely used to investigate a status of a tissue and/or a bone in a human body or the like. X-ray absorption of different objects depends on the density and a capture cross-section of the analyzed materials or tissues, respectively. Therefore, a performance indicator of the x-ray machine may be the lateral resolution as well as the achievable dynamic range or contrast, respectively. Furthermore, energy and duration of a required x-ray pulse, also referred to as dose or shot, should remain as low as possible.

In the state of the art, digital x-ray imagers are limited with regard to their dynamic range when neighboring materials have a high difference in absorption, e.g. several orders of magnitude, for instance, a screw in a bone. Either, the bone and the surrounding tissue can be imaged with high contrast and the screw is left simply as a black portion or the screw can be imaged with high contrast and the surrounding bones and tissues are simply white. Therefore, a need exists to increase the dynamic range of image sensor apparatuses, such as the image sensor apparatus 10.

An x-ray machine usually comprises an x-ray source and a digital imager, such as the image sensor apparatus 10. For most of the applications, e.g. mammography or the like, the image sensor apparatus 10 is made on glass comprising an active matrix array 12 of thin-film transistors, such as pixel selector transistors 26, thin-film photo diodes 16 as well as a scintillator layer. Although, a plurality of different array sizes is possible, most commonly the size is 20 cm x 30 cm with a pitch of 100 $\mu$m. A respective manufacturing process can be based on the manufacturing process for manufacturing of flat-panel displays, for example, as used for making LCD-displays.

Although many materials can be used for producing the array 12, for example based on a-Si or the like, in the present embodiment, the use of a metal oxide semiconductor material such as an IGZO material is preferred as a semiconductor material because it presents a high mobility, a low off current and a high bias stability.

FIG 1 shows in an exemplary reduced schematic circuitry a portion of the array 12, namely, a single x-ray sensing pixel element 14 as known by the art based on PPS. The x-ray sensing pixel element 14 comprises a photo diode 16 which is connected with a pixel selector transistor 26. The photo diode 16 is sensitive to x-rays and provides respective electric charge when the photo diode 16 is subjected to the x-rays forming the radiation in this embodiment. Not shown in FIG 1 is an integration capacitance which is usually also comprised by the x-ray sensing pixel element 14 of FIG 1.

The pixel selector transistor 26 is provided by a certain field effect transistor, namely, a metal oxide semiconductor field effect transistor (MOSFET). The pixel selector transistor 26 comprises three links 28, 34, 38.

A first link 28 is connected with an anode of the photo diode 16. The second link 34 which forms a pixel output link 36 at the same time, is adapted to be connected with the analyzing circuitry 32 of the image sensor apparatus 10. For this purpose, the second link 34 is connected to a dataline 60 which, in turn, is connected with the analyzing circuitry 32. In this regard, the x-ray sensing pixel element 14 can be read-out by the analyzing circuitry 32. As a plurality of x-ray sensing pixel elements 14 are connected with the dataline 60, respective pixel selection is required, in order to allow read-out of each single x-ray sensing pixel element 14. For this purpose, the pixel selector transistor 26 is configured to provide a pixel output signal at the pixel output link 36 dependent on a selector control signal of the analyzing circuitry 32 provided at a selection line 58, and, in turn, at the third link 38 in order to supply the pixel output signal selective to the analyzing circuitry 32.

A charge stored in the pixel capacitor 18 may therefore be read-out with an external Si-integrated circuit which is comprised by the analyzing circuitry 32 containing a goal CSA and an analog-digital converter (ADC), for example, for conversion to 14 or 16 bit.

Although this technology is operative, its operating speed is rather slow and it limits a noise floor because the noise of all lines, especially, a $V_{DD}$-line and datalines, such as the dataline 60, are superimposed on the read-out charges from the x-ray sensing pixel element 14 and the dynamic range cannot be adjusted. The respective x-ray imager system is shown in FIG 2 with regard to the image sensor apparatus 10.

According to the invention, the before-mentioned technology which is based on PPS, is replaced by a technology based on APS because APS allows an in-pixel charge amplification and therefore allows to improve the noise floor and the read-out speed. With this approach the base is formed in order to attenuate a gain of the amplifier TFT which can be achieved by several different ways.

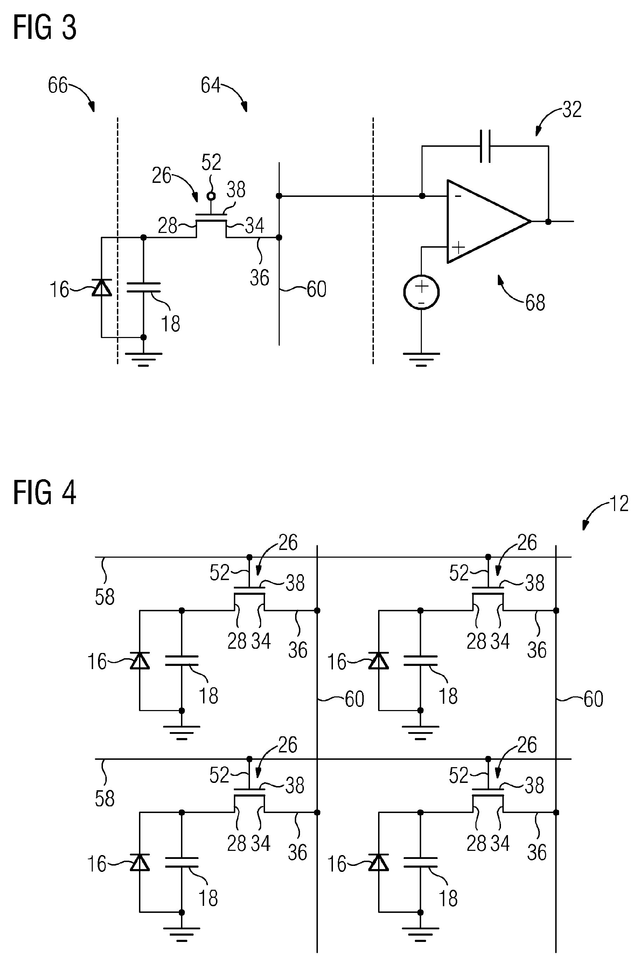

Generally, a thin-film detector such as the image sensor apparatus 10, usually comprises three parts, namely, a front plane 66, a backplane 64 and a read-out integrated circuit 68 as enclosed by the analyzing circuitry 32 (FIG 3). The front plane 66 usually delivers a certain amount of charge depending on the sensor, which is here a photo sensor, namely, the photo diode 16. In the backplane 64, the radiation sensing pixel element 14 comprises the storage capacitor 18 and a single thin-film transistor forming the pixel selector transistor 26. The thin-film detector comprises the array 12 of radiation sensing pixel elements 14 which form a matrix of pixels as shown in FIG 4. The dataline 60 is also comprised by the backplane 64. The dataline 60 is further connected with a read-out integrated circuit (RIOC 68) which may be provided by regular bulk semiconductor material, for example provided in CMOS-technology. FIG 4 shows in a schematic circuitry a portion of the array 12 including radiation sensing pixel elements 14 according to FIG 3.

As depicted in FIG 4, columns of radiation sensing pixel elements 14 are provided where the pixel output link 36 of the radiation sensing pixel elements 14 of a certain column are connected to a common dataline 60. At the same time, rows of the radiation sensing pixel elements 14 are provided where all third links 38 of the respective pixel selector transistors 26 are connected with a common selection line 58. This allows controlled read-out of each of the radiation sensing pixel elements 14.

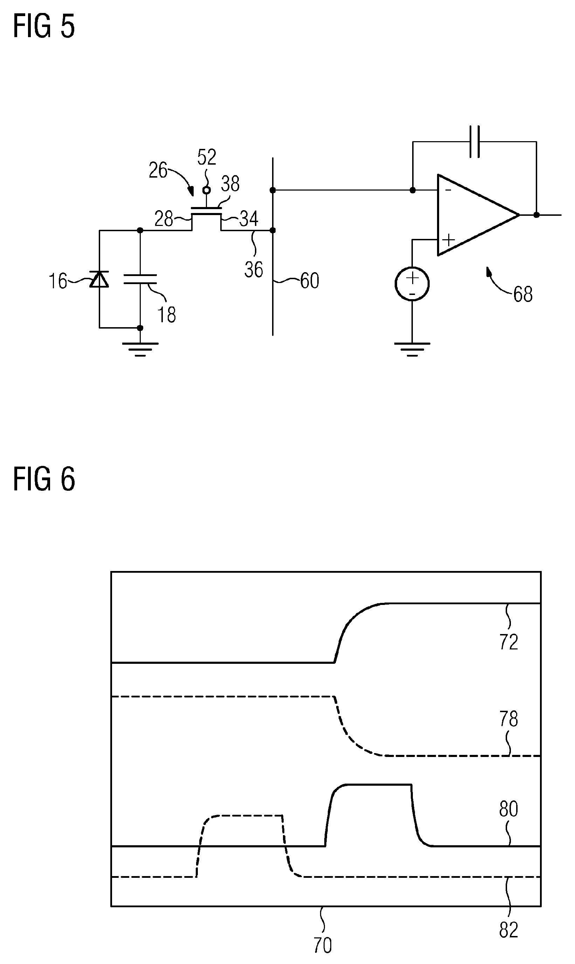

FIG 5 shows a schematic circuitry similar to FIG 3.

FIG 6 shows a corresponding schematic timing diagram of signals during read-out of the radiation sensing pixel element 14 according to FIG 5. An abscissa 70 represents a timing axis, wherein an ordinate corresponds to a certain voltage level. The diagram of FIG 6 shows four graphs, namely, a first graph 72 representing the signaling of an output of the ROIC 68 by a graph 72 as well as an internal signal represented by the graph 78. A graph 80 represents a select signal corresponding to a selector control signal of the analyzing circuitry 32 which acts on the third link 38 of the pixel selector transistor 26. Moreover, a reset-signal is represented by a graph 82. As can be seen from FIG 6, all noise of the read-out is directly superimposed on the small signal coming from the radiation sensing pixel element 14 leading to a very expensive ROIC 68 and resulting in a limited dynamic range. This can be improved by using an active pixel scheme.

The use of an active pixel scheme allows an in-pixel charge amplification and therefore improves the noise floor and the readout speed. A high charge-to-current gain can be obtained. With the active pixel scheme as used in the present invention the gain of the in-pixel amplifier TFT can be attenuated in several ways. Different approaches may be used to increase the dynamic range.

According to a first approach one frame is imaged and a respective charge stored in the pixel capacitor 18 is read-out twice, once with a high amplification and once with a low amplification. With regard to x-ray imager, only one shot with a standard dose is necessary.

A second approach requires imaging of one frame and read-out of the charge with a maximum amplification followed by an imaging of one frame and read-out of the charge, whereby the charge amplification is locally reduced in areas, where the previous image was too bright. With respect to x-ray imagers, this could correspond to two shots, namely, a first shot with a minimum dose and a second shot with a standard dose.

A third approach images a frame, and read-out is provided with a maximum amplification followed by imaging of one frame with reduced charge amplification. With respect to an x-ray imager, this could correspond to two shots with a standard dose.

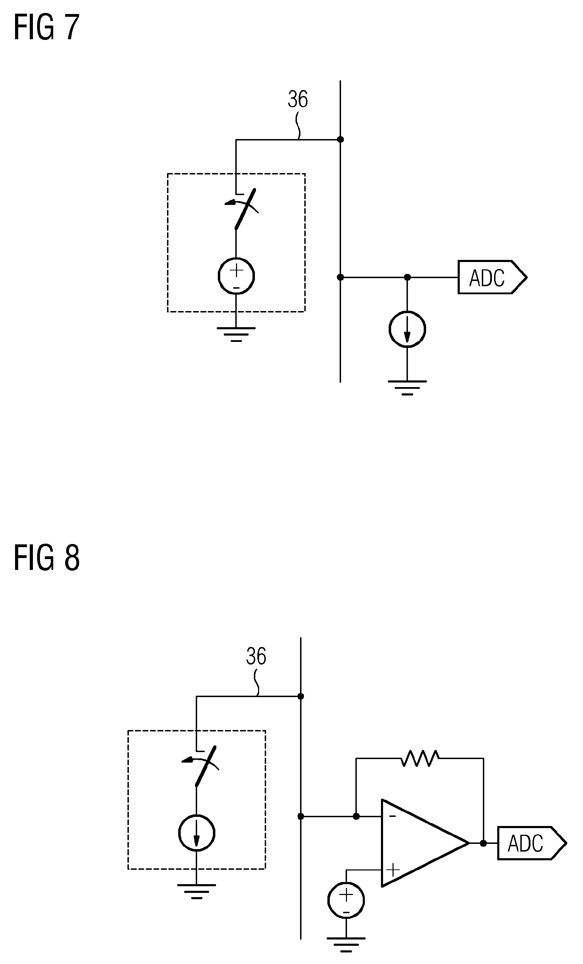

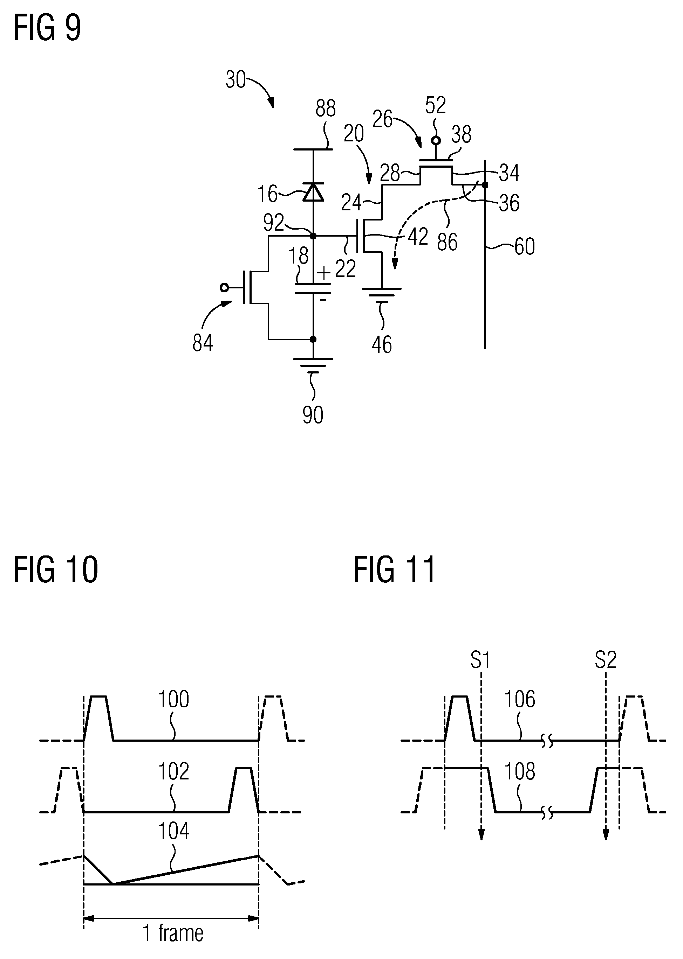

An active thin-film pixel element such as the radiation sensing pixel element 30 (FIG 9) operates differently with regard to an active pixel for contact image sensors (CIS), in the sense that a current mode is used. This difference is shown by figures 7 and 8. The current mode has at least two advantages in the thin-film technology compared to a voltage mode. In the voltage mode, with regard to the active pixel element 30, the dataline 60 is charged and discharged continuously because of the changing of the data. However, it should be noted that the dataline 60 represents a very large capacity, e.g. in the range of about 50 pF to a few hundreds of pF, and the charging comes from low-performance transistors providing only a limited current. This results in large time constants for settling of the dataline 60. Moreover, voltage levels for column read-out by the ROIC 68 is limited usually by the CMOS-technology limit which usually is in the range of 2.5 V or 1.8 V, whereas voltages applied in the backplane 64 can be in the range of about 10 V to about 40 V. In a voltage mode, the ROIC 68 should be able to operate these large voltage ranges but in the current mode, the voltage range can be limited to a rather small voltage range, preferably to a voltage range or voltage swing on the dataline of about 0 V. Consequently, the use of the current mode allows additional features which were difficult to realize in a voltage mode or which are not possible to be realized in a voltage mode. Therefore, a preferred embodiment of the invention uses the unique properties of the current mode read-out in thin-film-technologies in order to improve the system that is the image sensor apparatus 10, to high dynamic range (HDR).

An active pixel sensor such as the radiation sensing pixel element 30 (FIG 9, 12, 18) allows to amplify the signal within the array 12, and only then forward the pixel output signal to the analyzing circuitry 32. The current mode includes that the charges are integrated and stored in a capacitor and converted to a voltage. This voltage is used as a gate voltage for a common source or source degenerated amplifier such as the amplifier 20, which both of them generate a current. This current is read-out by the ROIC 68. An exemplary embodiment for a common source amplifier 20 is shown with regards to FIG 9. In this embodiment, the amplifier 20 comprises a MOSFET.

FIG 9 shows an exemplary embodiment of the radiation sensing pixel element 30 operating as an active pixel element in a current mode. The schematic circuitry according to FIG 9 has a photo diode 16 which is connected with the pixel capacitor 18 in series connection with regard to an electric reference potential 90 and an electric application potential 88 which preferably may cause a voltage in a range of about 10 volt to about 40 volt. However, depending on the characteristics of the photo diode 16 and the direct radiation to be sensed, this voltage can be chosen differently.

When the photo diode 16 is subjected to prospective radiation, the photo diode 16 provides a respective electric current which is accumulated in the pixel capacitor 18. Therefore, the pixel capacitor 18 stores respective electric charge dependent on the amount of radiation acting on the photo diode 16. At a connecting point 92 between the photo diode 16 and the pixel capacitor 18, the pixel amplifier 20 is connected. Presently, the pixel amplifier 20 comprises an amplification transistor 42 which is presently formed by a MOSFET. A gate of the MOSFET 42 forms an input link 22 that is connected with the connecting point 92. A source of the MOSFET 42 is connected with a ground level 46. Presently, the ground level 46 has a different electric potential as the reference 90. However, in other embodiments, these both electric potentials can be the same. A drain of the MOSFET 42 forms an output link 24 which is connected with a first link 28 of a pixel selector transistor 26. The pixel selector transistor 26 is presently also formed by a MOSFET. A second link 34, presently the drain of the MOSFET 26, forms a pixel output link 36, which in turn is connected with the dataline 60. The dataline 60 connects the radiation sensing pixel element 30 with the analyzing circuitry 32 as already described with regards to the previous FIGs above.

Moreover, the MOSFET 26 has a third link 38 which is formed by its gate, and which forms a connecting link 52 which in turn is connected with a selection line 58 as already described above with regard to the previous FIGs. Moreover, a reset switch 84 is provided which is also formed by a MOSFET. The reset switch 84 serves to discharge the pixel capacitor 18 after having read-out its charge status. The reset switch 84 is triggered by a respective reset signal which is provided also by the analyzing circuitry 32. The operating mechanism of the radiation sensing pixel element 30 according to FIG 9 is further detailed with regard to FIG 10 and 11.

FIG 10 shows three signals in a schematic time diagram, namely the reset signal 100, a select signal 102 and an internal signal 104 at the connecting point 92 with regard to one single frame. Generally, it can be derived from FIG 10 that, when the select signal 102 is present, a current is flowing from or to the ROIC 68 which is indicated in FIG 9 by the reference character 86. The reset signal 100 according to FIG 10 is acting on the reset switch 84. If the reset signal 100 has a high value, the pixel capacitor 18 is discharged. When the reset signal 100 has a low value, the reset switch 84 is in its open status so that charging of the pixel capacitor 18 is not affected. Further can be derived from FIG 10, that the internal signal 104 which represents the voltage at the connecting point 92, increases by the time because of the photo diode 16 supplies electric charge to the pixel capacitor 18 in response to being subjected to prospective radiation. After a certain time, which is determined by the frame timing as indicated in FIG 10, the select signal 102 which acts on the third link of the MOSFET 26, changes to the high level. During the select signal 102 having a high level, the current 86 is flowing. This allows to read-out the electric charge of the pixel capacitor 18 because the value of the current depends on the amount of charge stored by the pixel capacitor 18. If the select signal has changed to the low level, the MOSFET 26 switches into a switched-off status so that the current 86 does not further flow. Directly after finishing read-out by the select signal 102, the reset signal 100 is provided in order to discharge the pixel capacitor 18 so that it is prepared for a further measurement in a consecutive frame.

FIG 11 shows an improvement which allows two read-outs during one single frame. FIG 11 shows the reset signal 106 according to the reset signal 100 of FIG 10. However, the select signal 108 is deferring. The other conditions conform to the previous embodiment according to FIG 10. As can be seen from FIG 11, there are two possibilities for read-out of the radiation sensing pixel element 30, namely, at the time positions $S_1$ and $S_2$. As the time position $S_1$ is shortly after the reset signal 106 reaches its low level and the time position $S_2$ is just before the reset signal 106 changes to the high level, it is possible to read-out the radiation sensing pixel element 30 at two different times within a single frame where the electric charge stored by the pixel capacitor 18 is deferring. Only one shot is necessary.

At the timestamp $S_1$ the electric charge is rather low with regard to the time stamp $S_2$. This allows improving the dynamic range because if the photo diode 16 is exposed to a high radiation density, it provides high charging of the pixel capacitor 18. If the charge increases too much, the amplifier 20 may get into saturation so that the dynamic range of the radiation sensing pixel element 30 is limited. However, the timestamp $S_1$ allows to read-out the radiation sensing pixel element 30 early enough before the pixel amplifier 20 reaches saturation so that the dynamic range can be improved.

So, the dynamic range of the radiation sensing pixel element 30 can be increased without needing two different measurements with different sensitivities of the sensor, e.g. with regard to X-ray, without needing two X-ray shots with a different dose.

One possibility to increase the dynamic range is rescaling an input-to-output conversion rate or gain, respectively. For reducing a lower limit, the noise has to be substantially reduced or eliminated as much as possible, and the conversion gain should be as large as possible. For larger input values, the conversion gain could be reduced. Generally, four ways can be provided in order to affect the input-to-output conversion rate, which is presently a charge-to-current gain, (CtC-gain). The CtC-gain can be described as

$$G_{\mathrm{CTC}} = g_{\mathrm{m,amp}}/C_{\mathtt{store}}$$

wherein $g_{m,amp}$ is the transconductance of the amplification transistor 42 and $C_{store}$ is the charge stored on the pixel capacitor 18. Therefore, $g_m$ of the amplification transistor 42 should be controlled, for example, reduced. Generally, the following options are possible in order to affect an amplification factor such as $g_m$:

1. Reducing a voltage on the dataline 60. This means that the amplification transistor 42 is pushed from the saturation regime in a linear regime. The total current output can then be reduced linearly by changing the voltage on the data line 60.

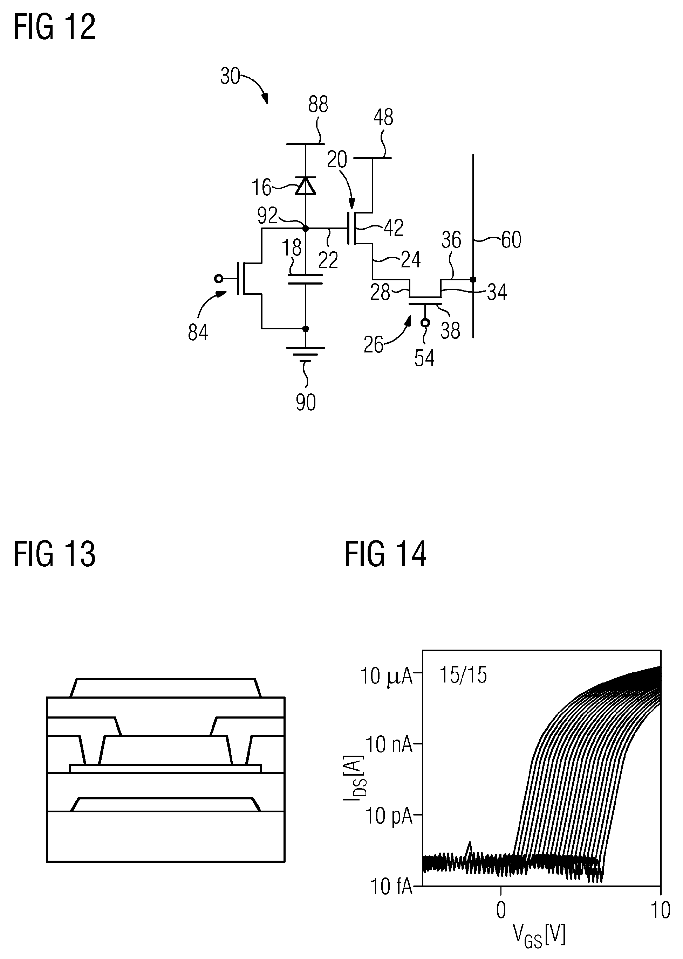

2. With regard to a source-degenerated topology which is further detailed with regard to FIG 12, it is possible to reduce the gain of the amplification transistor 42 by changing the value of a degeneration resistor R according to the equation

$$g_{\mathrm{m,eff}} = g_{\mathrm{m}}/(1 + g_{\mathrm{m}}R)$$

In this embodiment, the degeneration resistor is provided by the pixel selector transistor 26. By changing an applied on-voltage for the selected switching the value of the degeneration resistor can be changed. As can be seen from FIG 12, the resistance caused by the pixel selector transistor 26 acts on the amplification transistor 42 as a certain feedback operation so that the gain can be controlled by the resistance provided by the pixel selector transistor 26. In order to allow such operation, the pixel selector transistor 26 is not only operated in the switch mode, but it is now also operated partially in a linear mode. The linear mode is effective during read-out, wherein the switch mode, especially, the switched-off-status remains not amended. In this regard, by controlling the select signal, especially during a switched-on-status, the gain of the radiation sensing pixel element 30 can be controlled. The amplification transistor 42 is further connected with a supply voltage $V_{dd}$ indicated by reference character 48.

3. The ground level 46 of the pixel amplifier 20 according to FIG 9 can be used in order to control the gain. If the ground level 46 of the pixel amplifier 20 increases, then $V_G$-$V_S$-$V_T$ of the amplification transistor 42 decreases as well resulting in less current and in turn a smaller CtC-gain.

4. A further approach to control the gain is that an amplification transistor 44 is provided that has two control electrodes, in the case of a MOSFET, a dual-gate MOSFET. This allows using one of the dual gates to control an operating point of the amplification transistor 44 and the other of the dual-gate to provide amplification according to the charge stored in the pixel capacitor 18. A layer structure of such a dual-gate MOSFET 44 is shown in FIG 13. FIG 14 shows a schematic diagram with a plurality of graphs which correspond to deferring voltage levels of the second gate of the dual-gate MOSFET 44. The graphs depicted in the diagram correspond to a voltage at the first gate. As can be seen from the diagram, deferring the voltage at the second gate leads to move the graph in a direction of the abscissa. The abscissa represents a gate-to-source voltage of the MOSFET 44, wherein the ordinate corresponds to a drain-source current. Therefore, with the second gate, a threshold voltage of this transistor 44 can be changed. The resulted effect could be rather similar to raising the ground level 46 of the amplification transistor 42 as previously mentioned. The amplification transistor 44 is further connected with a supply voltage $V_{dd}$ indicated by reference character 48.

All of the before-mentioned approaches are preferably possible within thin-firm sensor arrays such as the array 12 especially with regard to a specific system using assembly with a thin-film backplane 64, silicon ROIC's and some general interface circuitry which may contain field programmable gate arrays, FPGA, DC/DC's, voltage transformers, etc.

Voltage sources for a panel ground, a reference, on and off values for the pixel selector transistor 26, and the like can all be set externally and freely. This is an advantage with regard to CIS, where all periphery components are generated in the same technology as a matrix and higher voltages than a supply voltage are difficult to be used or cannot be used.

Another advantage of the invention is that a voltage range at the internal connection 92 can be quite large, as this is provided in the thin-film-technology which e.g. may have a supply voltage in a range between about 10 volt and about 20 volt. So, the voltage at the cathode of the photo diode 16 can be quite high. Charges get therefore still extracted even if the internal connection 92 raises by e.g. 10 volt. This is not the case in CIS technology, where the cathode voltage of the photo diode 16 is limited to the supply voltage $V_{DD}$ of the technology which is usually in a range between about 1 volt and about 2.5 volt

All previously mentioned approaches effectively allow controlling the CtC-gain of the radiation sensing pixel element 30, thereby allowing increasing the maximum input signal that can be read-out by the ROIC 68. It should be noted that for optimal charge-to-current conversion, the amplification transistor 42, 44, is biased in saturation but it does not need to operate there. It may also operate in a linear mode.

With respect to the ROIC 68, two approaches can be followed in order to achieve a HDR read-out. Usually, the ROIC 68 needs correlated double sampling (CDS) in order to eliminate many sources of noise, both, in the ROIC 68 as well as in the backplane 64. This can be achieved by use of an APS, since the backplane 64 cannot be calibrated with PPS. A CDS measurement requires a double measurement with respect to signal and reset value which is usually subtracted in an analog fashion which is depicted according to FIG 15. Since a HDR requires two samples, e.g. one with a high sensitivity and one with a low sensitivity, a typical ROIC 68 cannot do this with one shot only. The reason is that the signal is read-out and the internal value is, in turn, immediately destroyed by the reset, in the case of CDS. In order to avoid this, two solutions may be provided:

1. A double pulse can be provided and read-out with deferring amplification settings, especially, amplification factors.

2. A more complex ROIC can be provided that is adapted to measure with a high sensitivity, store, measure with a low sensitivity and store, and measure the reset value, and, thereafter, both, high and low sensitivity measurements can be converted using CDS. FIG 16 shows a respective concept in a schematic diagram. Therefore, this concept allows using only one single shot with minimum radiation dose. This corresponds to the previous mentioned first option to increase the dynamic range. In FIG 16 is depicted, how the different read-outs are connected with each other in view of timing. A lower schematic circuitry shows a corresponding adaptation in order to achieve this kind of read-out applied to the circuitry according to FIG 15. FIG 15 and 16 are therefore comprised by the analyzing circuitry 32.

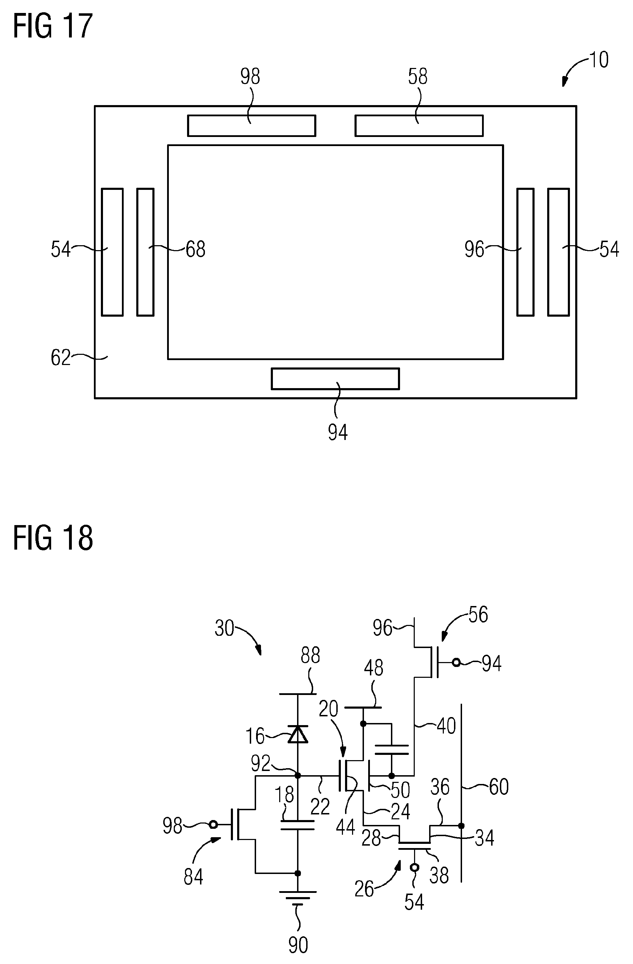

FIG 17 shows a general schematic block diagram for an imager system implementation for read-out scheme according to option 2 as mentioned above. A possible implementation of the second option of the read-out scheme using a dual-gate TFT such as the MOSFET 44, or for adjusting amplification or gain, respectively, is described with regard to FIG 17 and 18.

FIG 17 shows a general concept of an image sensor apparatus 10 which is adapted for use for a read-out scheme according to the second option. The image sensor apparatus 10 is based on the apparatus which is previously described with regard to FIG 2, which is why it is additionally hinted to the description with regard to FIG 2. On the framework 62 is provided the ROIC 68 as well as a gate driver vbgselect 94, a gate driver reset 98 as well as a vbackgate 96. A corresponding radiation sensing pixel element 30 is shown in FIG 18. Generally, the circuitry of this radiation sending pixel element 30 is based on the radiation sensing pixel element 30 according to FIG 12, which is why it is additionally referred to the description of FIG 12.

Differing from the embodiment of FIG 12, the amplification transistor 42 is here replaced by a amplification transistor 44 which was already discussed with regard to FIG 13 and 14. The amplification transistor 44 is provided by a dual-gate MOSFET. With regard to the amplification transistor 42 of the FIG 12, the amplification transistor 44 of FIG 18 has a second gate 50 which is connected to a gain control link 40. The gain control link 40 is connected with a further transistor 56, in this embodiment also a MOSFET. A gate of the transistor 56 is connected to vbgselect 94. A drain of the transistor 56 is connected to vbackgate 96. A source of the transistor 56 is connected to the gain control link 40.

With the signaling vbgselect 94 the time scheme for acting the gain control signal on the amplification transistor 44 can be predetermined. The signal vbackgate 96 allows to adjust an electric potential of the gate 50 of the MOSFET 44 in order to adjust its gain as indicated according to FIG 14. So, it is possible for the analyzing circuitry 32 to control the gain of each single radiation sensing pixel element 30 that is connected with the analyzing circuitry 32. The gate driver reset 98 produces a reset signal which is supplied to the reset switch 84 in order to establish a predetermined reset operation. The gate driver select 58 acts on the pixel selector transistor 26, namely, a respective link 52. The further details of operation correspond to the previous embodiments, which is why it is additionally referred thereto.

In a frame, in which the vbgselect 94 is activated, the vbackgate 96 sets a uniform maximum amplification factor across the imager by re-setting a threshold voltage of the amplification transistor (TFT) 20 to a more negative value.

Next, the imager is read-out.

Then, in a frame in which the vbgselect 94 is activated, the vbackgate 96 is set with a local specific amplification depending on the image recorded in the previous frame. The amplification is adjusted locally by re-setting the threshold voltage of the amplification transistor (TFT) 44 to a more positive value for areas that need a reduced amplification.

Next, the final image is read-out.

With a traditional X-ray imager, the imager can take an image twice, once with a low power and once with a high power. The disadvantage is that a high power and therefore a higher dose should be avoided. Moreover, this approach does not allow increasing the range of dynamic by more than a factor of about 3 to about 5, since the size of the integration capacitor is fixed. Additionally, the speed of reading-out of traditional imagers is very low, usually in a range of 3 to about 4 Hz partly because of massive RC delay in long datalines and partly because of the need to make multiplexing in the Si-ROIC for cost reasons. Additionally, not every data line may have a separate CSA and ADC. Finally, overlaying by computation of two images might cause image blur, since a patient and/or organs in the patient are moving on by the time frame during making the two images.

Also if a traditional X-ray imager makes two images, one image with a short pulse and one image with a long pulse, the speed of the frames need to be adjusted. The disadvantage is that the long pulse increases the dose. Moreover, the speed of the imager and the CSA-IC cannot be adjusted easily over orders of making magnitude. The size of the integration capacitor is fixed. Additionally, the speed for reading out is very slow as mentioned before. Finally, overlaying by computation of the two images may also cause image blur, as discussed before. The same disadvantages appear when an adjustable pixel capacitor is used.

The invention overcomes these disadvantages well by allowing a dynamic range about one to three orders of magnitude. Moreover, only one X-ray source with the same power and pulse length may be necessary to be used. The increase in range is not only caused by increasing the upper range but also by lowering the noise floor as long as the noise floor is not already set by the shot noise and off-current of the photo diode 16. Consequently, a large area thin-film imager can be improved. So it is possible, that a large area imager can be e.g. a palm reader.

If desired, the different functions and embodiments discussed herein may be performed in different or deviating order and/or are currently with each order in various ways. Furthermore, if desired, one or more of the above-described functions and/or embodiments may be optional or may be combined, preferably in an arbitrary manner.

Also various aspects of the invention are set out in the independent claims, other aspects of the invention comprise other combinations of features from the described embodiments and/or the dependent claims with the features of the independent claims, and not solely the combinations explicitly set out in the claims.

It is also observed that, while the above describes exemplary embodiments of the invention, this description should not be regarded as limiting the scope. Rather, there are several variations and modifications which may be made without departing from the scope of the present invention as defined in the appended claims.

Finally, the advantages and effects as discussed with respect to the radiation sensing pixel element can also be applied to the image sensor apparatus and the method as well. Especially, it is possible to transform apparatus features to method features and vice-versa.

**Claims**

1. A radiation sensing pixel element (30) for an image sensor apparatus (10) having an array (12) of radiation sensing pixel elements (30), wherein the radiation sensing pixel element (30) comprises:

   - a photo diode (16) in order to sense radiation;
   - a pixel capacitor (18) connected with the photo diode (16) in order to store electric charge supplied by the photo diode (16) when the photo diode (16) is subjected to the radiation;
   - a pixel amplifier (20) having an input link (22) connected with the pixel capacitor (18) and an output link (24), wherein the pixel amplifier (20) is configured to provide a pixel amplifier output signal at the output link (24) dependent on an amount of the electric charge stored in the pixel capacitor (18);

   - a pixel selector transistor (26) having a first, a second, and a third link (28, 34, 38), wherein the first link (28) is connected with the output link (24) of the pixel amplifier (20) and the second link (34) forming a pixel output link (36) is adapted to be connected with an analyzing circuitry (32) of the image sensor apparatus (10), wherein the pixel selector transistor (26) is configured to provide a pixel output signal at the pixel output link (36) dependent on the pixel amplifier output signal and a selector control signal of the analyzing circuitry (32) provided at the third link (38) in order to supply the pixel output signal to the analyzing circuitry (32);

   **characterized in that**
   the radiation sensing pixel element (30) is configured to control a gain defining the dependency between the pixel output signal and the amount of the electric charge stored in the pixel capacitor (18).

2. The radiation sensing pixel element according to claim 1, **characterized by** being configured to provide an electric current as the pixel output signal.

3. The radiation sensing pixel element according to claim 1 or 2, **characterized by** comprising a gain control link (40) configured to receive a gain control signal.

4. The radiation sensing pixel element according to claim 3, **characterized in that** the pixel amplifier (20) is connected with the gain control link (40) and is configured to adjust an amplification factor dependent on the gain control signal.

5. The radiation sensing pixel element according to anyone of the claims 1 through 4, **characterized in that** the pixel amplifier (20) comprises an amplification transistor (42, 44).

6. The radiation sensing pixel element according to anyone of the claims 1 through 5, **characterized in that** the pixel amplifier (20) is connected with a ground level (46) that is provided by the radiation sensing pixel element (30), wherein an electric potential of the ground level (46) is controlled by the gain control signal, wherein the pixel amplifier (20) is configured to adjust the amplification factor dependent on the electric potential of the ground level (46).

7. The radiation sensing pixel element according to claim 5 or 6, **characterized in that** the pixel amplifier (20) is configured to control a first operating point of the amplification transistor (42, 44) dependent on the gain control signal.

**8.** The radiation sensing pixel element according to anyone of the claims 5 through 7, **characterized in that** the amplification transistor (44) has a separate control electrode (50) which the gain control signal is acting on in order to control the first operating point.

**9.** The radiation sensing pixel element according to anyone of the claims 5 through 8, **characterized in that** the pixel output signal is formed by the electric current and the radiation sensing pixel element (30) is configured to control the first operating point of the amplification transistor (42) by a voltage supplied to the pixel output link (36).

**10.** The radiation sensing pixel element according to anyone of the claims 5 through 9, **characterized in that** the pixel selector transistor (26) is configured to be operated at least partially in a linear operating mode in response to the gain control signal.

**11.** The radiation sensing pixel element according to claim 10, **characterized in that** the pixel selector transistor (26) is connected with the amplification transistor (42) such that the first operating point of the amplification transistor (42) is controlled by the pixel selector transistor (26).

**12.** The radiation sensing pixel element according to claim 10 or 11, **characterized in that** the radiation sensing pixel element (30) is configured to adjust a second operating point of the pixel selector transistor (26) dependent on the gain control signal.

**13.** An image sensor apparatus (10) including an array (12) of radiation sensing pixel elements (30) and an analyzing circuitry (32) for analyzing pixel output signals of the radiation sensing pixel elements (30), wherein the analyzing circuitry (32) is connected with the array (12) of the radiation sensing pixel elements (30), and **characterized in that** the array (12) comprises radiation sensing pixel elements (30) according to anyone of the preceding claims.

**14.** A method for operating a radiation sensing pixel element (30) of an array (12) of radiation sensing pixel elements (30) of an image sensor apparatus (10), wherein the method comprises:

- sensing radiation with a photo diode (16);
- storing electric charge supplied by the photo diode (16), when the photo diode (16) is subjected to the radiation, in a pixel capacitor (18) connected with the photo diode (16);
- providing a pixel amplifier output signal at an output link (24) of a pixel amplifier (20) having an input link (22) connected with the pixel capacitor (18), wherein the pixel amplifier output signal depends on an amount of the electric charge stored in the pixel capacitor (18); and
- providing a pixel output signal at a pixel output link (36) of the radiation sensing pixel element (30) by a pixel selector transistor (26) dependent on the pixel amplifier output signal and a selector control signal of an analyzing circuitry (32) of the image sensor apparatus (10) in order to supply the pixel output signal to the analyzing circuitry (32);

**characterized by**

- controlling a gain defining the dependency between the pixel output signal and the amount of the electric charge stored in the pixel capacitor (18).

## FIG 1

## FIG 2

## FIG 3

## FIG 4

FIG 5

FIG 6

# FIG 7

36

ADC

# FIG 8

36

ADC

FIG 9

FIG 10

FIG 11

FIG 12

FIG 13

FIG 14

FIG 15

FIG 16

## FIG 17

## FIG 18

Europäisches
Patentamt

European
Patent Office

Office européen
des brevets

## EUROPEAN SEARCH REPORT

**Application Number**

EP 16 18 8363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/263950 A1 (FENIGSTEIN AMOS [IL] ET AL) 18 September 2014 (2014-09-18) | 1-8,13, 14 | INV. H04N5/32 |
| Y | * abstract; figure 1 * | 9-12 | H04N5/355 H04N5/374 |
| X,D | WO 2009/156927 A2 (PHILIPS INTELLECTUAL PROPERTY [DE]; KONINKL PHILIPS ELECTRONICS NV [NL] 30 December 2009 (2009-12-30) * abstract; figure 4a * * the whole document * | 1,13,14 | H04N5/243 ADD. H04N5/235 |
| Y | WO 2005/015639 A1 (UNIV FRASER SIMON [CA]; KARIM KARIM S [CA]) 17 February 2005 (2005-02-17) | 9 | |
| A | * abstract; figure 10 * * the whole document * | 1-8, 10-14 | |
| Y | US 2012/147237 A1 (XU CHEN [US] ET AL) 14 June 2012 (2012-06-14) * paragraph [0045] * | 10-12 | |

**TECHNICAL FIELDS SEARCHED (IPC)**

H04N

The present search report has been drawn up for all claims

| Place of search | Date of completion of the search | Examiner |
|---|---|---|
| Munich | 27 February 2017 | Prange, Stefan |

EPO FORM 1503 03.82 (P04C01)

# EP 3 293 965 A1

## ANNEX TO THE EUROPEAN SEARCH REPORT
## ON EUROPEAN PATENT APPLICATION NO.

EP 16 18 8363

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2017

| Patent document cited in search report | | Publication date | Patent family member(s) | | Publication date |
|---|---|---|---|---|---|
| US 2014263950 | A1 | 18-09-2014 | NONE | | |
| WO 2009156927 | A2 | 30-12-2009 | CN | 102066975 A | 18-05-2011 |
| | | | EP | 2294455 A2 | 16-03-2011 |
| | | | JP | 5857384 B2 | 10-02-2016 |
| | | | JP | 2011525983 A | 29-09-2011 |
| | | | JP | 2014060725 A | 03-04-2014 |
| | | | RU | 2011102785 A | 10-08-2012 |
| | | | US | 2011108735 A1 | 12-05-2011 |
| | | | WO | 2009156927 A2 | 30-12-2009 |
| WO 2005015639 | A1 | 17-02-2005 | CA | 2535490 A1 | 17-02-2005 |
| | | | EP | 1661183 A1 | 31-05-2006 |
| | | | JP | 2007502061 A | 01-02-2007 |
| | | | US | 2007187609 A1 | 16-08-2007 |
| | | | WO | 2005015639 A1 | 17-02-2005 |
| US 2012147237 | A1 | 14-06-2012 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9230311 B2
- US 9106851 B2

- WO 2009156927 A2